# FASCICULE DE BREVET EUROPEEN

(11) **EP 3 847 047 B1**
(45) Date de publication et mention de la délivrance du brevet: **26.02.2025**
(21) Numéro de dépôt: 19769845.9
(22) Date de dépôt: 14.08.2019
(51) Int. Cl.: B60K 11/04, B60K 11/08

(54) **DISPOSITIF DE REGULATION D'UN FLUX D'AIR POUR UNE ENTREE D'AIR D'UN VEHICULE AUTOMOBILE**
VORRICHTUNG ZUR REGELUNG EINES LUFTSTROMS FÜR EINEN LUFTEINLASS EINES KRAFTFAHRZEUGS
DEVICE FOR REGULATING AN AIR STREAM FOR AN AIR INLET OF A MOTOR VEHICLE

(30) Priorité: 07.09.2018 FR 1858034
(43) Date de publication de la demande: 14.07.2021
(73) Titulaire: Valeo Systemes Thermiques, 78322 Le Mesnil Saint Denis Cedex (FR)
(72) Inventeur: ANDRE, Stephane, 78322 LE MESNIL SAINT DENIS CEDEX (FR); RIPA, Jerome, 78322 LE MESNIL SAINT DENIS CEDEX (FR); LANGLET, Pierre Alexandre, 78322 LE MESNIL SAINT DENIS (FR)
(74) Mandataire: Valeo Systèmes Thermiques
(86) Numéro de dépôt international: PCT/FR2019/051924
(87) Numéro de publication internationale: WO 2020/049236

(56) Documents cités:
- EP-A1- 1 216 872
- EP-A1- 2 402 574
- EP-B1- 1 216 872
- DE-A1- 102008 020 399
- FR-A1- 2 950 574
- FR-A1- 3 013 302

## Description

L'invention a pour objet un dispositif de régulation d'un flux d'air pour une entrée d'air d'un véhicule automobile et plus précisément ainsi qu'un véhicule automobile, et notamment un véhicule automobile électrique comprenant un tel dispositif de régulation d'entrée d'air.

De manière générale, un véhicule automobile comprend une entrée d'air se présentant sous la forme d'une ouverture située sur la face avant dudit véhicule automobile. L'air entrant est utilisé pour permettre un échange de chaleur entre celui-ci et le système de refroidissement du véhicule automobile, ledit système de refroidissement étant situé à proximité de la face avant dudit véhicule. Plus précisément, l'air qui pénètre dans le compartiment moteur du véhicule automobile est guidé vers le système de refroidissement dudit véhicule automobile pour permettre un échange thermique entre l'air entrant et l'échangeur de chaleur du système de refroidissement. Il est important de minimiser les déperditions du flux d'air entre l'entrée d'air et l'échangeur de chaleur. En effet, tout flux d'air pénétrant à l'intérieur du véhicule, et s'échappant vers le compartiment moteur avant d'avoir contribué à l'échange de chaleur à l'intérieur du véhicule automobile, influence de manière négative le coefficient de résistance à l'air dudit véhicule automobile.

Il est connu d'utiliser des guides d'air se présentant sous la forme d'un boîtier généralement en plastique ou autre matériau flexible reliant l'entrée d'air au système de refroidissement.

Des dispositifs de régulation d'un flux d'air pour une entrée d'air d'un véhicule automobile sont notamment connus des documents FR3013302 A1 et FR2950574 A1.

Dans le cadre d'un véhicule électrique, le dispositif de régulation d'entrée d'air peut comprendre un conduit d'air agencé en aval du système de refroidissement et conçu pour guider le flux d'air vers l'extérieur du véhicule. Un tel conduit peut s'avérer avantageux pour générer un effet venturi en aval de l'unité de refroidissement de sorte qu'un plus grand débit d'air puisse passer au travers du système de refroidissement améliorant ainsi le rendement thermique.

Un tel conduit présente cependant certains inconvénients. En effet, les conduits tels que connus dans l'art antérieur sont relativement peu étanches or des fuites d'air, provoquant une diminution du débit d'air entrant, peuvent vite réduire les performances thermiques du système de refroidissement. De plus, lors qu'un véhicule électrique est à l'arrêt et branché à une station, ou borne électrique, afin de recharger la batterie, le groupe moto ventilateur du système de refroidissement est activé afin d'assurer un refroidissement de la batterie et éviter que celle-ci ne surchauffe. Toutefois un tel fonctionnement génère des nuisances sonores pour l'utilisateur.

La présente invention cherche à surmonter cet inconvénient et propose un dispositif de régulation d'un flux d'air pour une entrée d'air d'un véhicule automobile,selon les caractéristiques de la revendication 1. En d'autres termes, le dispositif de régulation comprend plusieurs éléments et au moins un moyen d'étanchéité est agencé entre au moins deux éléments.

Le volet permet d'obturer le conduit d'écoulement et notamment le conduit menant le flux d'air vers l'extérieur du véhicule. Les nuisances sonores ainsi générées lors du rechargement de la batterie sont contenues à l'intérieur du véhicule et ne peuvent plus être perçues à l'extérieur du véhicule.

D'autres modes de réalisation du dispositif de régulation selon l'invention sont tels que définis par les revendications dépendantes.

D'autres modes de réalisation encore d'un dispositif de régulation d'entrée d'air ne faisant pas tous partie de l'invention et pris isolément ou en combinaison proposent que :
- le moyen d'étanchéité correspond à un joint ou une bande en mousse, ou bande de mousse ;
- le moyen d'étanchéité est étanche à l'air et à l'eau ;
- le dispositif de régulation comprend un volet agencé au sein du conduit d'écoulement en aval de l'unité de refroidissement par rapport à l'écoulement du flux d'air ;
- le conduit d'écoulement comprend une entrée et une sortie, la dite sortie étant composée d'au moins deux conduits distincts, ledit dispositif comprenant au moins un volet étant apte à obturer chacun desdits conduits ;
- un dispositif d'obturation comprenant un ensemble de volets d'obturation aptes à pivoter en rotation de manière à faire varier le débit de flux d'air, est agencé dans le conduit d'écoulement en amont de l'unité de refroidissement par rapport à l'écoulement du flux d'air ;
- l'unité de refroidissement est inclinée par rapport au dispositif d'obturation ;
- le volet est de type tambour ou coulissant;
- le conduit d'écoulement comprend une entrée et une sortie, la dite sortie étant composée d'au moins deux conduits distincts, le volet étant apte à obturer chacun desdits conduits ;
- un dispositif d'obturation comprenant un ensemble de volets d'obturation aptes à pivoter en rotation de manière à faire varier le débit de flux d'air, est agencé dans le conduit d'écoulement en amont de l'unité de refroidissement par rapport à l'écoulement du flux d'air ;
- l'unité de refroidissement est inclinée par rapport au dispositif d'obturation ;
- des aubes sont agencées en amont et/ou en aval de l'unité de refroidissement par rapport à l'écoulement du flux d'air ;
- les aubes s'étendent du dispositif d'obturation jusqu'à l'unité de refroidissement ;
- la section de passage du conduit d'écoulement s'agrandit depuis l'entrée jusqu'à l'unité de refroidissement et rétrécit depuis l'unité de refroidissement jusqu'à la sortie.

L'invention concerne également un véhicule comprenant un dispositif de régulation d'un flux d'air pour une entrée d'air selon tel que revendiqué.

D'autres modes de réalisation d'un véhicule non-couverts par l'invention pris isolément ou en combinaison proposent que :
- le véhicule comprend une entrée d'air, éventuellement dotée d'une calandre, la sortie du conduit d'écoulement comprend un conduit de débourrage agencé pour mener le flux d'air vers l'extérieur du véhicule et un conduit de refroidissement agencé pour mener le flux d'air vers le compartiment moteur du véhicule ;
- le véhicule comprend en outre une entrée d'air additionnelle et un conduit additionnel reliant ladite entrée additionnelle au conduit de débourrage.

D'autres caractéristiques et avantages de l'invention apparaîtront à la lecture de la description qui va suivre. Celle-ci est purement illustrative et doit être lue en regard des dessins annexés sur lesquels :
- la figure 1 illustre un dispositif de régulation d'un flux d'air selon l'invention selon une vue de profil,
- la figure 2 illustre une coupe du dispositif de régulation d'un flux d'air de la figure 1 selon une vue de profil,
- la figure 3 illustre une partie du dispositif de régulation d'un flux d'air selon une vue en perspective,
- la figure 4 illustre le dispositif de régulation selon l'invention selon une vue en perspective,
- Les figures 5A - 5E illustrent différents modes de réalisation du moyen d'étanchéité.

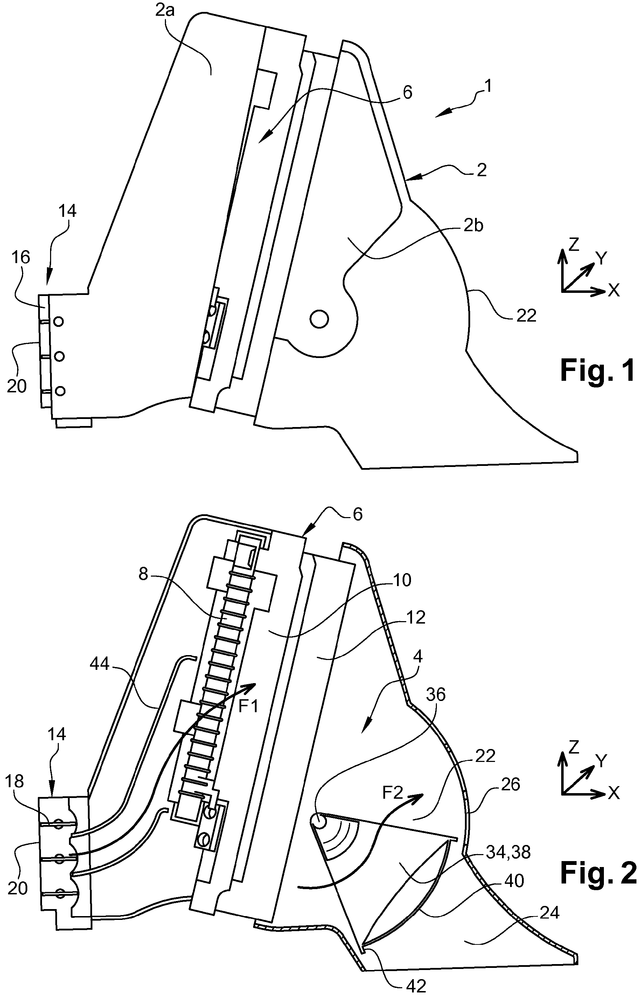

La figure 1 illustre le dispositif de régulation 1 d'un flux d'air pour une entrée d'air d'un véhicule automobile selon l'invention. Le dispositif de régulation 1 s'étend selon une direction longitudinale (X), transversale (Y) et verticale (Z), par exemple par rapport aux axes du véhicule, comme représenté par les axes sur les figures 1 et 2.

Selon la présente invention, les termes "aval", "amont", "en série" et "parallèle" qualifient la position d'un composant par rapport à un autre, selon le sens de d'écoulement d'un flux d'air dans un dispositif de régulation 1 d'un flux d'air selon la présente invention.

Le dispositif de régulation 1 d'un flux d'air selon l'invention comprend un boîtier 2 correspondant à une enveloppe, ou encore une gaine, définissant ainsi, de par ses parois, un conduit d'écoulement 4 avec une entrée d'air 20 et une sortie d'air 22 dans lequel s'écoule un flux d'air. Le boîtier 2 est réalisé en matériau flexible afin d'absorber les vibrations du véhicule lorsque celui-ci roule, et en matériau suffisamment résistant afin de porter des éléments tels que des échangeurs de chaleur, certains plastiques par exemple en polypropylène ou en polyamide-6 se prêtent à une telle utilisation.

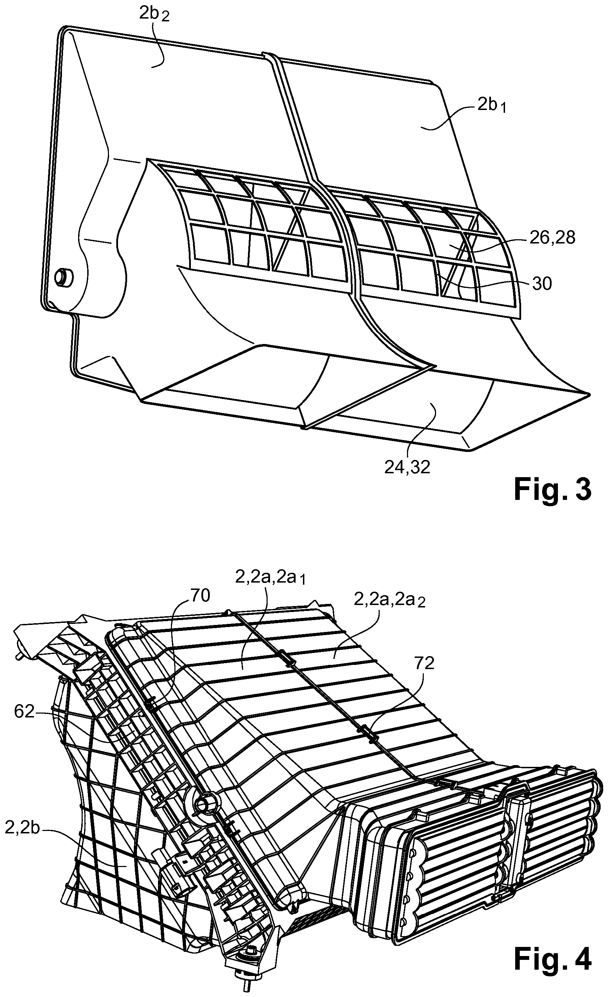

Le dispositif de régulation 1 d'un flux d'air selon l'invention comprend en outre une unité de refroidissement 6. L'unité de refroidissement 6 comprend au moins un échangeur de chaleur destiné à permettre un échange thermique entre le flux d'air et le fluide circulant au sein de l'échangeur de chaleur. Telle qu'illustrée en figure 2, l'unité de refroidissement 6 comprend ici un premier et un second échangeur de chaleur 8, 10. Le premier échangeur de chaleur 8 correspond par exemple à un condenseur tandis que le second échangeur de chaleur 10 correspond par exemple à un radiateur. L'unité de refroidissement 6 comprend en outre un groupe moto-ventilateur 12 correspondant à un ventilateur avec des pâles et un moteur associé de manière à pouvoir aspirer et relâcher un flux d'air à travers le dispositif de régulation 1, et ce même lorsque le véhicule est à l'arrêt. L'unité de refroidissement 6 comprend également un cadre porteur 62, visible sur la figure 4, correspondant à une structure rigide, plus précisément un cadre rigide en plastique avec quatre montants délimitant une surface dans laquelle sont agencés les échangeurs de chaleur 8,10 et ledit groupe moto-ventilateur 12. Afin de garantir la continuité du conduit d'écoulement 4, le boitier 2 est fixé de manière étanche au cadre porteur 62. Autrement dit le cadre porteur 62 assure la continuité du conduit d'écoulement 4, ou en d'autres termes, le cadre porteur 62 correspond à une partie du conduit d'écoulement 4.

Le dispositif de régulation 1 d'un flux d'air selon l'invention comprend en outre un dispositif d'obturation 14 comprenant un ensemble de volets d'obturation 18 aptes à pivoter en rotation de manière à faire varier le débit du flux d'air, ledit dispositif d'obturation 14 est agencé dans le conduit d'écoulement 4 en amont de l'unité de refroidissement 6 par rapport à l'écoulement du flux d'air. Le dispositif d'obturation 14 comprend en outre un cadre support 16 présentant des paliers de manière à porter les volets d'obturation 18.

Chaque volet d'obturation 18 comprend un axe de rotation se matérialisant par un tourillon qui est inséré dans les paliers du cadre support 16. Les axes de rotation permettent aux volets d'obturation 18 de passer d'une configuration d'ouverture à une configuration de fermeture. La configuration d'ouverture, ou autrement dit ouvrir un volet d'obturation 18, revient à placer (par rotation) les volets d'obturation 18 de manière à ce qu'ils s'opposent le moins possible au passage du flux d'air tout en l'orientant de manière appropriée. Comme illustré sur la figure 2, dans la configuration d'ouverture, les volets d'obturation 18 sont agencés dans une position horizontale, en d'autres termes ils s'étendent selon une direction longitudinale (X) et transversale (Y), et assurent ainsi que le débit pour le flux d'air soit maximal, l'entrée d'air 20 d'air étant dégagée. La configuration de fermeture, ou autrement dit fermer un volet d'obturation 18, revient à placer les volets d'obturation 18 de manière à ce qu'ils s'opposent par leur surface frontale au maximum à l'écoulement du flux d'air F, en coopération avec les autres volets d'obturation 18. Dans cette configuration, les volets d'obturation 18 sont agencés dans une position verticale, autrement dit ils s'étendent selon une direction transversale (Y) et verticale (Z), et assurent ainsi que le débit pour le flux d'air soit minimal voire nul, l'entrée d'air 20 d'air étant obturée. Bien évidement, les volets d'obturation 18 sont aptes à adopter toute position intermédiaire entre ces deux configurations.

Le boîtier 2 selon l'invention, et tel qu'illustré aux figures 1 et 4, est réalisé en deux parties, une première partie 2a reliant l'entrée du boîtier 2, et donc l'entrée d'air 20 du conduit découlement 4, où est agencée le dispositif d'obturation 14, à l'unité de refroidissement 6, notamment au cadre porteur 62, et une deuxième partie 2b reliant l'unité de refroidissement 6, et plus précisément le cadre porteur 62, à la sortie du boîtier 2 et donc à la sortie d'air 22 du conduit d'écoulement 4. Les parties 2a, 2b du boîtier comprennent des moyens de fixation 70 tels que des clips, crochets, vis avec tige filetée/écrous avec taraudage, boulons, *etc.* de formes complémentaires aux moyens de fixation 70 agencés sur le cadre porteur 62. On comprend donc que le cadre porteur 62 assure la continuité du conduit d'écoulement 4 entre les deux parties 2a,2b du boitier 2.

Selon d'autres modes de réalisation, les parties 2a,2b peuvent aussi comprendre des moyens de fixation de formes complémentaires de manière à ce que chaque partie 2a,2b puisse se fixer l'une à l'autre. Il est également envisageable d'avoir un boîtier 2 en une seule pièce monobloc formant continuité de matière entre l'entrée d'air 20 et la sortie d'air 22 du conduit d'écoulement 4.

Le boitier 2, et plus précisément chaque partie 2a,2b, selon l'invention et tel qu'illustré en figure 3 et 4, peut comprendre deux demi-boitiers 2a₁,2a₂,2b₁,2b₂. Chaque paire de demi-boitier 2a₁,2a₂ ou 2b₁,2b₂ forment ensemble une partie du conduit d'écoulement 4. Autrement dit, la première paire de demi-boitier 2a₁,2a₂ telle qu'illustrée en figure 4, constitue, la partie 2a du boitier 2 à savoir la partie du conduit d'écoulement 4 reliant l'entrée du boîtier 2, notamment l'entrée d'air 20 du conduit d'écoulement 4, où est agencé le dispositif d'obturation 14, à l'unité de refroidissement 6, notamment au cadre porteur 62. La deuxième paire de demi boîtier 2b₁,2b₂, illustré en figure 3, constitue la deuxième partie 2b à savoir la partie du conduit d'écoulement 4 reliant l'unité de refroidissement 6, et plus précisément le cadre porteur 62, à la sortie du boîtier 2 et donc à la sortie d'air 22 du conduit d'écoulement 4. Chaque paire de demi-boitier 2a₁,2a₂, ou 2b₁,2b₂ comprend des moyens de fixation 72 de forme complémentaire tel que des clips où la partie femelle est agencé sur un demi-boitier 2a₁ et la partie mâle est agencé sur l'autre demi-boitier 2a₂ correspondant ou inversement. Ces moyens de fixation 72 peuvent être réversibles de sorte que les demi-boitiers 2a₁,2a₂,2b₁,2b₂ soient fixés l'un à l'autre de manière amovible, autrement dit que les demi-boitiers 2a₁,2a₂,2b₁,2b₂ soient dissociables par une liaison réversible.

Le boitier 2 du dispositif de régulation 1 d'un flux d'air selon l'invention comprend au moins un moyen d'étanchéité 64 pour éviter toute fuite d'air en dehors du conduit d'écoulement 4. Autrement dit, le ou les moyens d'étanchéité 64 assurent que l'intégralité du flux d'air passant par l'entrée d'air 20 du conduit d'écoulement 4 ressorte par la sortie d'air 22 du conduit d'écoulement 4. Le ou les moyens d'étanchéité 64 peuvent être agencés à différents endroits du dispositif de régulation 1. En effet, chaque moyen d'étanchéité 64 est agencé à l'interface de, c'est-à-dire entre, deux éléments du dispositif de régulation 1 disjoints, autrement dit, dissociables ou encore ne formant pas continuité de matière. Plus précisément, afin de réaliser une étanchéité optimale, le moyen d'étanchéité 64 est agencé sur le pourtour périphérique de chaque élément formant une partie du conduit d'écoulement 4 dissociés. Autrement dit, entre deux éléments formant une partie du conduit d'écoulement 4, un moyen d'étanchéité 64 est agencé sur la surface de liaison périphérique au niveau des bords périphériques de chacun de ces éléments.

Le moyen d'étanchéité 64 peut donc être agencé entre chaque demi-boitier 2a₁,2a₂ et 2b₁,2b₂ et/ou entre une partie 2a ou 2b du boitier 2 et le cadre porteur 62 et/ou entre chaque demi-boitier 2a₁,2a₂ et 2b₁,2b₂ et le cadre porteur 62. Il est aussi possible d'envisager de positionner un moyen d'étanchéité 64 entre le boitier 2 et le cadre support 16 du dispositif d'obturation 14 au niveau de l'entrée d'air 20.

Evidement l'invention ne se limite pas à l'agencement même des moyens d'étanchéité 64, il est possible de combiner les différents agencements cités ci-dessus.

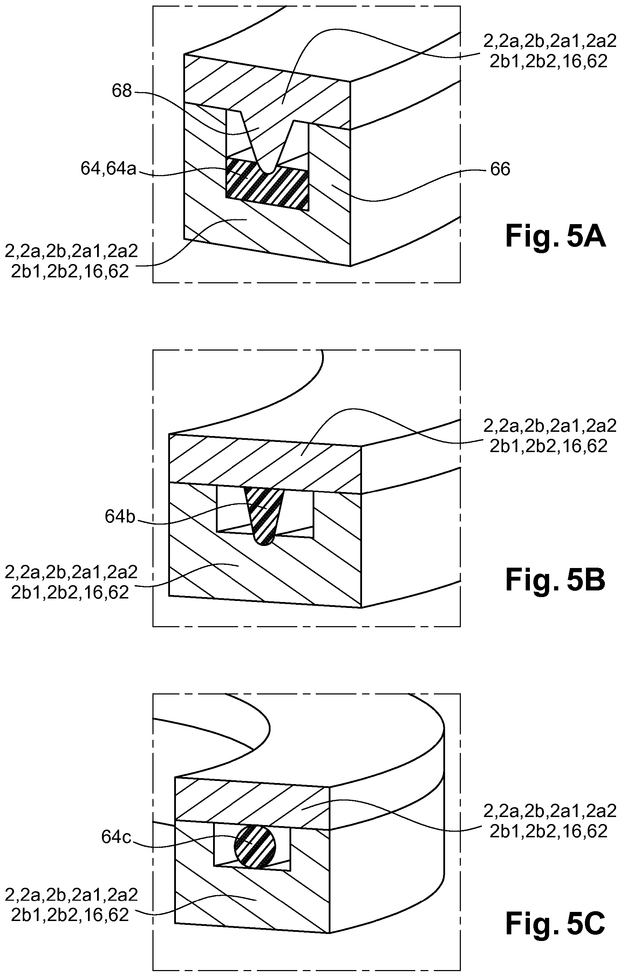

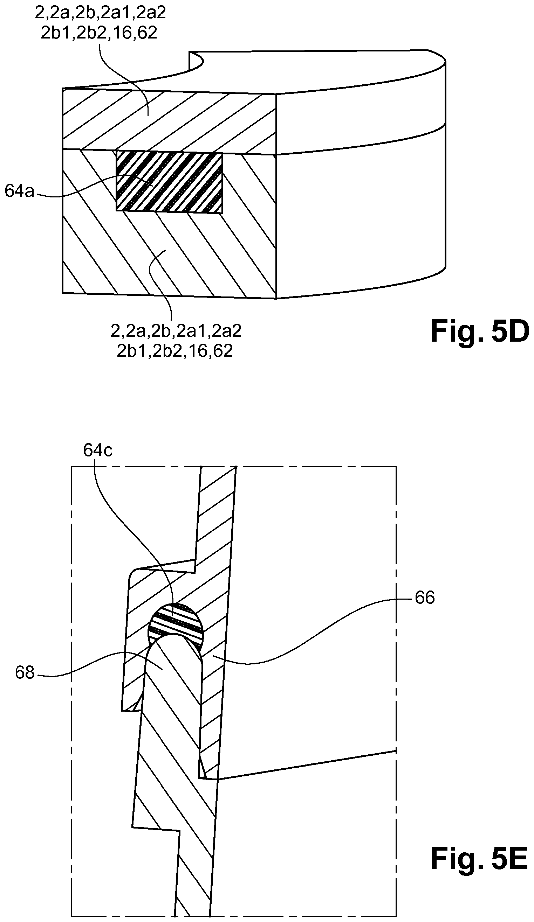

Comme illustré sur les figures 5A à 5E, le moyen d'étanchéité 64 peut par exemple correspondre à un joint, plus précisément un joint torique 64c (FIG.5C et FIG.5E), à une bande en mousse 64a (FIG.5A et FIG.5D) ou encore à une lèvre en élastomère surmoulée 64b (FIG.5B).

Le moyen d'étanchéité 64 peut être étanche à l'air ou à l'air et à l'eau.

Afin de mieux décrire les moyens d'étanchéité, la description ultérieure portant sur les figures 5A à 5E, incorpore la notion d'éléments du dispositif de régulation 1. Il faut comprendre pour la suite, que ces éléments correspondent à deux éléments du dispositif de régulation 1 disjoints, amovible, dissociable, ou encore assemblés l'un à l'autre par une liaison réversible. Dans ces éléments sont compris le boitier 2, chaque partie 2a,2b du boitier 2, chaque demi-boitier 2a₁,2a₂,2b₁,2b₂, le cadre support 16 du dispositif d'obturation 14 ou encore le cadre porteur 62 sans distinction ou limitation particulière.

Comme illustré en figure 5A, le moyen d'étanchéité 64 peut corresponde à une bande en mousse 64a agencée à l'interface entre deux éléments 2,2a, 2b,2a1,2a2,2b1,2b2,16,62 du dispositif de régulation. Pour cela un de ces éléments, disons premier élément, peut comprendre une rainure 66 dans laquelle est agencée la bande en mousse 64b et l'autre élément, disons second élément, peut comprendre une protubérance 68 s'étendant au sein de la rainure 66, c'est-à-dire en direction de la paroi de fond de la rainure 66, et venir ainsi en appui contre la bande en mousse 64a, la bande en mousse 64a se déforme de manière à rester au contact de la protubérance 68 et le flux d'air ne peut plus passer à travers cette coopération. La bande en mousse 64a, pouvant être une mousse en polyuréthane, est particulièrement adapté pour une étanchéité à l'air uniquement.

Selon une variante illustrée en figure 5D, la bande en mousse 64a est agencée à l'interface entre deux éléments 2, 2a, 2b, 2a1, 2a2, 2b1, 2b2, 16, 62 du dispositif de régulation 1 au sein d'une rainure 66 présente sur le premier élément, et le second élément vient directement en appui contre la bande en mousse 64a sans protubérance, la bande en mousse 64a se déforme de manière à rester au contact du second élément 2, 2a, 2b, 2a1, 2a2, 2b1, 2b2, 16, 62 et le flux d'air ne peut plus passer à travers cette coopération.

Comme illustré en figure 5C, le moyen d'étanchéité 64 peut corresponde à un joint torique 64c agencé à l'interface entre deux éléments 2,2a,2b,2a1, 2a2,2b1,2b2,16,62 du dispositif de régulation 1. Pour cela un de ces éléments, disons premier élément, peut comprendre une rainure 66 dans laquelle est agencé le joint torique 64c et l'autre élément, disons second élément, peut venir directement en appui contre le joint torique 64c, le joint torique 64c se déforme de manière à rester au contact du deuxième élément 2, 2a, 2b, 2a1, 2a2, 2b1, 2b2, 16, 62 et le flux d'air ne peut plus passer à travers cette coopération. Le joint torique 64c, pouvant être en caoutchouc ou tout autre élastomère, est particulièrement adapté pour une étanchéité à l'air et à l'eau. Bien évidemment, le second élément peut aussi comprendre une protubérance 68 s'étendant au sein de la rainure 66 et venant en appui contre le joint torique 64c comme illustré en figure 5E.

Comme illustré en figure 5B, le moyen d'étanchéité 64 peut corresponde à une lèvre surmoulée 64b agencée à l'interface entre deux éléments 2, 2a, 2b, 2a1, 2a2, 2b1, 2b2, 16, 62 du dispositif de régulation. Pour cela un de ces éléments, disons premier élément, peut comprendre une rainure 66 et une lèvre surmoulée 64b peut être surmoulée sur l'autre élément, disons second élément, et venir directement en appui contre la paroi de fond de la rainure 66 c'est-à-dire contre le premier élément, la lèvre surmoulée 64b se déforme de manière à rester au contact du premier élément 2, 2a, 2b, 2a1, 2a2, 2b1, 2b2, 16, 62 et le flux d'air ne peut plus passer à travers cette coopération. La lèvre surmoulée 64b, pouvant être en caoutchouc ou tout autre élastomère (par exemple du SEBS ou polystyrène-b-poly(éthylène-butylène)-b-polystyrène), est particulièrement adapté pour une étanchéité à l'air et à l'eau.

Le conduit d'écoulement 4 comprend une entrée d'air 20 et une sortie d'air 22 cette dernière est composée d'au moins deux conduits distincts, le volet qui sera décrit ultérieurement étant apte à obturer chacun desdits conduits. La sortie d'air 22 du conduit d'écoulement 4 comprend un conduit de débourrage 24 agencé pour guider le flux d'air vers l'extérieur du véhicule et un conduit de refroidissement 26 agencé pour guider le flux d'air vers le compartiment moteur du véhicule. Comme illustré sur la figure 3, le conduit de refroidissement 26 correspond ici un conduit où une ouverture 28 dotée d'une grille 30 est réalisée au sein d'une paroi du boîtier 2 permettant ainsi au flux d'air de s'écouler du conduit d'écoulement 4 vers le compartiment moteur. Le conduit de débourrage 24 correspond ici à un conduit où une ouverture 32 est réalisée au sein d'une paroi du boîtier 2 permettant ainsi au flux d'air de s'écouler du conduit d'écoulement 4 vers l'extérieur du véhicule.

Le dispositif de régulation 1 d'un flux d'air selon l'invention comprend en outre comprend un volet 34 agencé au sein du conduit d'écoulement 4 en aval de l'unité de refroidissement 6 par rapport à l'écoulement du flux d'air. Le volet 34 est de type tambour comme illustré sur la figure 2 car, étant donné qu'un tel dispositif de régulation s'étend sur une grande partie de la largeur du véhicule (Axe Y) pendant ainsi atteindre plus d'un mètre, le volet tambour, de par sa structure qui présente une meilleure résistance mécanique, est mieux adapté pour un tel usage. D'autres volets peuvent être envisageables tels qu'un volet coulissant (également connu sous l'appellation anglaise sliding door) comprenant une porte coulissante sur laquelle est agencée au moins une crémaillère et un engrenage complémentaire à la crémaillère mis en rotation autour d'un axe par un actionneur afin de mettre ce volet en mouvement, notamment selon un mouvement de translation, selon un mode de réalisation non illustré.

Le volet 34 tambour comprend un axe de rotation 36 sous la forme d'un arbre permettant le pivotement du volet 34. Le volet 34 tambour comprend en outre trois parois pleines. Deux parois latérales 38 agencées aux deux extrémités opposées de l'axe de rotation 36, ces deux parois latérales 38 sont parallèles et s'inscrivent dans un plan défini par les axes XZ perpendiculaire à l'axe de rotation 36, et une paroi transversale 40 reliant les parois latérales l'unes à l'autre. La paroi transversale 40 s'inscrit dans un plan défini par les axes XZ de forme galbée permet l'écoulement ou le tarissement du flux d'air dans un conduit 24,26 de sortie d'air 22 du conduit d'écoulement 4 selon son positionnement. Le volume entre les parois latérales 38, la paroi transversale 40 et l'axe de rotation 36 est inoccupé si bien que le flux d'air est apte à passer entre ces éléments comme illustré par la flèche F2 sur la figure 2.

La paroi transversale 40 du volet 34 tambour est apte à obturer le conduit de débourrage 24 comme illustré sur la figure 2. La paroi transversale 40 du volet 34 tambour est également apte à obturer le conduit de refroidissement 26 selon un mode de réalisation non illustré.

Les différentes parois du volet 34 épousent la forme des parois du boîtier 2 de manière à assurer une bonne étanchéité, le volet 34 peut également comprendre en outre des lèvres 42 en élastomère surmoulées aux extrémités des parois. Ainsi la paroi du boîtier 2 où est agencé le conduit de refroidissement 26 est de forme sensiblement arrondie, de manière à ce que la paroi transversale 40 de forme galbée du volet 34 puisse obturer intégralement ce conduit de sortie.

Lorsque le véhicule est en train de rouler, le volet 34 est agencé de manière à obturer le conduit de refroidissement 26, le flux d'air passant donc par le conduit de débourrage 24. Lorsque le véhicule est en stationnement à une borne (la batterie étant en train d'être rechargée), le volet 34 est agencé de manière à obturer le conduit de débourrage 24 conduit de refroidissement 26, le flux d'air passant donc par le conduit de refroidissement 26 comme illustré sur la figure 2. Le volet 34 est apte à adopter toute position intermédiaire.

Toujours selon l'invention, l'unité de refroidissement 6 est inclinée par rapport au dispositif d'obturation 14. En d'autres termes, les plans médians de l'unité de refroidissement 6 et du dispositif d'obturation 14 forment un angle différent de 0° (non nul), en particulier un angle compris dans un écart entre 10 et 80°, plus précisément dans un écart entre 30° et 60°. Un tel agencement permet de diminuer l'encombrement stérique du dispositif de régulation 1.

Toujours selon l'invention, il peut s'avérer avantageux que des aubes 44 soient agencées en amont et/ou en aval de l'unité de refroidissement 6 par rapport à l'écoulement du flux d'air. Les aubes 44 correspondent à des guides d'air sous forme de parois aux formes arrondies définissant des couloirs pour le flux d'air afin de répartir le flux d'air F1 (figure 2) sur l'intégralité de la surface des échangeurs de chaleur 8, 10 de l'unité de refroidissement 6, il en résulte un meilleur rendement thermique.

Afin d'améliorer ce rendement thermique, il s'avère bénéfique que les aubes 44 s'étendent du dispositif d'obturation 14 jusqu'à l'unité de refroidissement 6. Les aubes 44 peuvent par exemple prolonger la continuité des volets d'obturation 18 du dispositif d'obturation 14 lorsqu'ils sont en configuration d'ouverture. Les aubes 44 peuvent également avoir une forme générale en S avec un bord d'attaque correspondant à une extrémité de l'aube s'étendant dans un plan horizontal définit par les axes X et Y, un bord de fuite sensiblement parallèle au bord d'attaque toutefois à une hauteur (Z) différente et un tronçon incliné ou rampe reliant le bord d'attaque et le bord de fuite qui s'étend principalement selon un axe vertical (Z). L'invention ne se limite pas à la forme des aubes 44 tant qu'elles servent de guide pour le flux d'air, les aubes 44 peuvent par exemple être en forme de quart de cercle.

La première partie plane extrémale de l'aube 44 destinée à être traversée par le flux d'air F1 correspond au bord d'attaque et est plane. La seconde et dernière partie plane extrémale destinée à être traversée par le flux d'air F1 correspond au bord de fuite est également plane. Le tronçon incliné ne fait pas partie des bords d'attaque et de fuite.

Les aubes 44 s'étendent entre le dispositif d'obturation 14 jusqu'à l'unité de refroidissement 6 sans pour autant être en contact avec ces éléments. Afin de mieux guider l'air, les bords d'attaque et de fuite des aubes 44 sont agencés à proximité respective du dispositif d'obturation 14 et de l'unité de refroidissement 6, sans pour autant être en butée contre ces éléments.

Toujours selon l'invention, la section de passage du conduit d'écoulement 4 s'agrandit depuis l'entrée d'air 20 du conduit d'écoulement 4 jusqu'à l'unité de refroidissement 6 et rétrécit depuis l'unité de refroidissement 6 jusqu'à la sortie d'air 22 du conduit d'écoulement 4 selon le sens d'écoulement du flux d'air. Autrement dit, la section de passage du conduit d'écoulement 4 a au moins une dimension (largeur et/ou hauteur) qui augmente au fur et à mesure de la longueur, ou au fur et à mesure que l'on se rapproche de l'unité de refroidissement 6 en partant de l'entrée d'air 20, selon le sens d'écoulement du flux d'air. De manière analogue, la section de passage du conduit d'écoulement 4 a au moins une dimension (largeur et/ou hauteur) qui diminue au fur et à mesure de la longueur, ou au fur et à mesure que l'on s'éloigne de l'unité de refroidissement 6 en se rapprochant de la sortie d'air 22, selon le sens d'écoulement du flux d'air.

Toujours selon l'invention, des pièces d'absorption acoustique peuvent être agencé au sein du boîtier 2 assurant ainsi un revêtement isolant acoustique du conduit d'écoulement 4 en supprimant ou limitant la propagation de bruit vers l'extérieur. La pièce d'absorption acoustique peut par exemple correspondre à une couche de mousse en polyuréthanne qui possède des pores ouverts ou fermés et préférentiellement imprégnée par un copolymère de vinylidène, ou encore à une cavité fonctionnant comme un résonateur d'Helmholtz.

Selon un mode de réalisation non illustré, un véhicule automobile comprend une poutre de pare-chocs en dessous de laquelle est placée une calandre ou grille. Cette calandre est fixe et reste en position ouverte pour laisser passer un flux d'air entrant. Le véhicule selon l'invention comprend un dispositif 1 de régulation d'entrée d'air tel que décrit ci-dessus.

Le véhicule automobile selon l'invention comprend donc une entrée d'air dotée d'une calandre et un dispositif de régulation 1 de cette entrée d'air. La sortie d'air 22 du conduit d'écoulement 4 comprend un conduit de débourrage 24 agencé pour mener le flux d'air vers l'extérieur du véhicule et un conduit de refroidissement 26 agencé pour mener le flux d'air vers le compartiment moteur du véhicule.

Le véhicule selon l'invention peut comprendre en outre une entrée additionnelle ainsi qu'un conduit additionnel reliant ladite entrée additionnelle avec le conduit de débourrage menant le flux d'air vers l'extérieur du véhicule. Ceci permet d'accentuer l'effet venturi du conduit de débourrage augmentant ainsi le débit d'air circulant améliorant ainsi le rendement thermique. L'entrée additionnelle peut également être dotée d'une grille afin d'éviter tout corps étranger (branches, feuilles,...) de pénétrer au sein du conduit additionnel.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention telle que définie par les revendications.

## Revendications

1. Dispositif de régulation (1) d'un flux d'air pour une entrée d'air d'un véhicule automobile, comprenant un boitier (2) définissant un conduit d'écoulement (4)
où s'écoule un flux d'air, dans lequel est agencé au moins partiellement une unité de refroidissement (6) comprenant au moins un échangeur de chaleur (8,10) et un groupe moto-ventilateur (12), le boitier (2) comprenant un moyen d'étanchéité (64, 64a, 64b, 64c) pour éviter toute fuite d'air en dehors du conduit d'écoulement (4),
l'unité de refroidissement (6) comprend un cadre porteur (62) dans lequel est agencé ledit au moins un échangeur de chaleur (8 ; 10) et ledit groupe moto-ventilateur (2), le boîtier (2) étant fixé au cadre porteur (62), de manière à ce que le cadre porteur (62) corresponde à une partie du conduit d'écoulement (4),
**caractérisé en ce que**
le boitier (2) comprend une première partie (2a) agencée en amont du cadre porteur (62) reliant une entrée d'air (20) du conduit d'écoulement (4) au cadre porteur (62), et une deuxième partie (2b) agencée en aval du cadre porteur (62), ledit moyen d'étanchéité (64, 64a, 64b, 64c) étant agencé entre le cadre porteur (62) et chaque partie (2a,2b), et,
**en ce que** la première partie (2a) est constituée de deux demi-boitiers (2a₁,2a₂), formant ensemble ledit conduit d'écoulement (4), le moyen d'étanchéité (64, 64a, 64b, 64c) étant agencé entre chaque demi-boitier (2a₁,2a₂).

2. Dispositif de régulation (1) selon l'une des revendication 1 dans lequel le moyen d'étanchéité (64, 64a, 64b, 64c) correspond à un joint torique (64c), une lèvre surmoulée (64b) ou une bande en mousse (64a).

3. Dispositif de régulation (1) selon l'une des revendications 1 ou 2, dans lequel le moyen d'étanchéité est étanche à l'air et/ou à l'eau.

4. Dispositif de régulation (1) selon l'une des revendications précédentes, dans lequel le conduit d'écoulement (4) comprend une entrée d'air (20) et une sortie d'air (22), la dite sortie d'air (22) étant composée d'au moins deux conduits (24,26) distincts, ledit dispositif comprenant au moins un volet (34) étant apte à obturer chacun desdits conduits (24,26).

5. Dispositif de régulation (1) selon l'une des revendications précédentes, dans lequel un dispositif d'obturation (14) comprenant un ensemble de volets d'obturation (18) aptes à pivoter en rotation de manière à faire varier le débit de flux d'air, est agencé dans le conduit d'écoulement (4) en amont de l'unité de refroidissement (6) par rapport à l'écoulement du flux d'air.

6. Dispositif de régulation (1) selon la revendication 5, dans lequel l'unité de refroidissement (6) est inclinée par rapport au dispositif d'obturation (14).

7. Dispositif de régulation (1) selon l'une des revendications précédentes, dans lequel le boitier (2) ou chaque partie du boitier (2a,2b) est constituée de deux demi-boitiers (2a₁,2a₂,2b₁,2b₂), formant ensemble ledit conduit d'écoulement (4), un moyen d'étanchéité (64, 64a, 64b, 64c) étant agencé entre chaque demi-boitier (2a₁,2a₂,2b₁,2b₂).

8. Dispositif de régulation (1) selon l'une des revendications précédentes, dans lequel un moyen d'étanchéité (64, 64a, 64b, 64c) est agencé entre le dispositif d'obturation (14) et le boitier (2).

9. Véhicule automobile comprenant une entrée d'air et un dispositif de régulation (1) pour ladite entrée d'air selon l'une des revendications 1 à 9.

## Patentansprüche

1. Vorrichtung zur Regelung (1) eines Luftstroms für einen Lufteinlass eines Kraftfahrzeugs, beinhaltend ein Gehäuse (2), das einen Strömungskanal (4) definiert, in dem ein Luftstrom strömt, in dem mindestens teilweise eine Kühleinheit (6) angeordnet ist, die mindestens einen Wärmetauscher (8, 10) und einen Motorlüfter (12) beinhaltet, wobei das Gehäuse (2) ein Dichtmittel (64, 64a, 64b, 64c) beinhaltet, um jegliche Luftleckage aus dem Strömungskanal (4) heraus zu verhindern,
wobei die Kühleinheit (6) einen Tragrahmen (62) beinhaltet, in dem der mindestens eine Wärmetauscher (8; 10) und der Motorlüfter (2) angeordnet sind, wobei das Gehäuse (2) an dem Tragrahmen (62) befestigt ist, sodass der Tragrahmen (62) einem Teil des Strömungskanals (4) entspricht,
**dadurch gekennzeichnet, dass**
das Gehäuse (2) einen ersten Teil (2a), der stromaufwärts des Tragrahmens (62) angeordnet ist und einen Lufteinlass (20) des Strömungskanals (4) mit dem Tragrahmen (62) verbindet, und einen zweiten Teil (2b), der stromabwärts des Tragrahmens (62) angeordnet ist, beinhaltet, wobei das Dichtmittel (64, 64a, 64b, 64c) zwischen dem Tragrahmen (62) und jedem Teil (2a, 2b) angeordnet ist, und
dass der erste Teil (2a) aus zwei Gehäusehälften (2a₁, 2a₂) besteht, die zusammen den Strömungskanal (4) bilden, wobei das Dichtmittel (64, 64a, 64b, 64c) zwischen jeder Gehäusehälfte (2a₁, 2a₂) angeordnet ist.

2. Regelungsvorrichtung (1) nach Anspruch 1, wobei das Dichtmittel (64, 64a, 64b, 64c) einem O-Ring (64c), einer aufgeformten Lippe (64b) oder einem Schaumstoffstreifen (64a) entspricht.

3. Regelungsvorrichtung (1) nach einem der Ansprüche 1 oder 2, wobei das Dichtmittel luftdicht und/oder wasserdicht ist.

4. Regelungsvorrichtung (1) nach einem der vorhergehenden Ansprüche, wobei der Strömungskanal (4) einen Lufteinlass (20) und einen Luftauslass (22) beinhaltet, wobei der Luftauslass (22) aus mindestens zwei unterschiedlichen Kanälen (24, 26) besteht, wobei die Vorrichtung mindestens eine Klappe (34) beinhaltet, die dazu fähig ist, jeden der Kanäle (24, 26) zu verschließen.

5. Regelungsvorrichtung (1) nach einem der vorhergehenden Ansprüche, wobei eine Verschlussvorrichtung (14), die eine Anordnung von Verschlussklappen (18) beinhaltet, die dazu fähig sind, drehbar zu schwenken, um den Luftstromdurchsatz zu variieren, in dem Strömungskanal (4) mit Bezug auf die Strömung des Luftstroms stromaufwärts der Kühleinheit (6) angeordnet ist.

6. Regelungsvorrichtung (1) nach Anspruch 5, wobei die Kühleinheit (6) mit Bezug auf die Verschlussvorrichtung (14) geneigt ist.

7. Regelungsvorrichtung (1) nach einem der vorhergehenden Ansprüche, wobei das Gehäuse (2) oder jeder Teil des Gehäuses (2a, 2b) aus zwei Gehäusehälften (2a₁, 2a₂, 2b₁, 2b₂) besteht, die zusammen den Strömungskanal (4) bilden, wobei ein Dichtmittel (64, 64a, 64b, 64c) zwischen jeder Gehäusehälfte (2a₁, 2a₂, 2b₁, 2b₂) angeordnet ist.

8. Regelungsvorrichtung (1) nach einem der vorhergehenden Ansprüche, wobei ein Dichtmittel (64, 64a, 64b, 64c) zwischen der Verschlussvorrichtung (14) und dem Gehäuse (2) angeordnet ist.

9. Kraftfahrzeug, das einen Lufteinlass und eine Regelungsvorrichtung (1) für den Lufteinlass nach einem der Ansprüche 1 bis 9 beinhaltet.

## Claims

1. Device (1) for regulating an air stream for an air inlet of a motor vehicle, comprising a housing (2) defining a flow duct (4) in which an air stream flows, in which a cooling unit (6) comprising at least one heat exchanger (8, 10) and a motor-fan unit (12) is at least partially arranged, the housing (2) comprising a sealing means (64, 64a, 64b, 64c) to prevent any air from leaking out of the flow duct (4),
the cooling unit (6) comprises a support frame (62) in which said at least one heat exchanger (8; 10) and said motor-fan unit (2) are arranged, the housing (2) being fixed to the support frame (62) in such a way that the support frame (62) corresponds to part of the flow duct (4),
**characterized in that**
the housing (2) comprises a first part (2a) arranged upstream of the support frame (62) and connecting an air inlet (20) of the flow duct (4) to the support frame (62), and a second part (2b) arranged downstream of the support frame (62), said sealing means (64, 64a, 64b, 64c) being arranged between the support frame (62) and each part (2a, 2b), and
**in that** the first part (2a) is made up of two half-housings (2a₁, 2a₂) which together form said flow duct (4), the sealing means (64, 64a, 64b, 64c) being arranged between each half-housing (2a₁, 2a₂).

2. Regulating device (1) according to Claim 1, wherein the sealing means (64, 64a, 64b, 64c) corresponds to an O-ring (64c), to an overmoulded lip (64b) or to a foam strip (64a).

3. Regulating device (1) according to either of Claims 1 and 2, wherein the sealing means is airtight and/or watertight.

4. Regulating device (1) according to one of the preceding claims, wherein the flow duct (4) comprises an air inlet (20) and an air outlet (22), said air outlet (22) being made up of at least two separate ducts (24, 26), said device comprising at least one flap (34) being capable of shutting off each of said ducts (24, 26).

5. Regulating device (1) according to one of the preceding claims, wherein a shut-off device (14) comprising a set of shut-off flaps (18), which are capable of pivoting rotatably so that they vary the flow rate of the air stream, is arranged in the flow duct (4) upstream of the cooling unit (6) relative to the flow of the air stream.

6. Regulating device (1) according to Claim 5, wherein the cooling unit (6) is inclined relative to the shut-off device (14).

7. Regulating device (1) according to one of the preceding claims, wherein the housing (2) or each part of the housing (2a, 2b) is made up of two half-housings (2a₁, 2a₂, 2b₁, 2b₂) which together form said flow duct (4), a sealing means (64, 64a, 64b, 64c) being arranged between each half-housing (2a₁, 2a₂, 2b₁, 2b₂) .

8. Regulating device (1) according to one of the preceding claims, wherein a sealing means (64, 64a, 64b, 64c) is arranged between the shut-off device (14) and the housing (2).

9. Motor vehicle comprising an air inlet and a regulating device (1) for said air inlet according to one of Claims 1 to 9.
